# EUROPEAN PATENT SPECIFICATION

(11) **EP 3 865 940 B1**
(45) Date of publication and mention of the grant of the patent: **25.10.2023**
(21) Application number: 20157656.8
(22) Date of filing: 17.02.2020
(51) Int. Cl.: G03B 21/14, B60Q 3/00

(54) **360 DEGREE PROJECTION MAPPING DEVICE FOR A VEHICLE**
ABBILDUNGSVORRICHTUNG MIT 360-GRAD-PROJEKTION FÜR EIN FAHRZEUG
DISPOSITIF DE MAPPAGE DE PROJECTION À 360 DEGRÉS POUR UN VÉHICLE

(43) Date of publication of application: 18.08.2021
(73) Proprietor: Bayerische Motoren Werke Aktiengesellschaft, 80809 München (DE)
(72) Inventor: Eichhorn, Julian, Menlo Park, CA 94025 (US); Mantovani, Francesco, San Jose, CA 95112 (US); Mok, Brian, Santa Clara, CA 95050 (US)

(56) References cited:
- DE-A1-102008 001 629
- US-A1- 2006 059 699
- US-A1- 2008 143 975
- US-A1- 2010 318 319
- US-A1- 2015 054 963

## Description

### Technical field

The invention relates to a rotatable projection device, according to claim 1, a method for providing projections onto an interior geometry of a vehicle according to claim 7, and a corresponding computer program and storage medium according to claims 9 and 10.

### Background

The present invention is related to the use of projectors inside a vehicle to project images on surfaces, which provide improved safety and driving experience. An interaction area may be provided using a projector and a camera to capture gestures. However, projectors/cameras have a limited field of view/field of projection, and thus the area that can be covered in a vehicle is limited.

One solution is to provide the vehicle with several projectors that together form a broader projection area. This is expensive, and requires additional space and wiring in the already limited space of the vehicle. The objective of the present invention is to increase the projection field of view without the need for additional projectors.

Publication US 2010/318319 A1 aims to disclose an apparatus for projection of a specified pattern onto an installation surface whose geometry is previously known, which comprises a laser projector for projection of the pattern onto the installation surface, a separate laser distance measurement device based on the principle of the running time measurement of a diffusely reflected laser beam, which is connected with the laser projector, in a fixed position, whereby the exit direction of the laser beam that leaves the laser distance measurement device is specified in fixed and non-adjustable manner, a drive unit by means of which the laser projector and the laser distance measurement device can jointly be pivoted or rotated about two different axes, into an angle position that can be specifically specified, and at least one data processing device for controlling the laser projector, the laser distance measurement device, and the drive unit, in which the laser distance measurement device and the data processing device are set up to calculate the relative orientation and position between laser distance measurement device and installation surface, by measuring the distance and the direction of the laser beam emitted by the laser distance measurement device to a plurality of measurement points to be suitably selected on the installation surface.

Publication US 2015/054963 A1 aims to disclose systems, methods, and software for an entertainment projection device including a camera for capturing user motion and a graphical display that is arranged to be altered in response to detection of user motion as captured by the camera. Two or more systems may be used to display a continuous image, such as in projecting streaming video.

Publication US 2008/143975 A1 aims to disclose a method comprising recognizing a disturbance in a display zone of a projected image and displaying a selected state in response to the recognized disturbance. The method further includes recognizing a gesture which interrupts a light source and is associated with an action to be taken on or associated with the displayed selected state. An action is executed in response to the recognized gesture.

Publication DE 10 2008 001629 A1 aims to disclose a device with projection means for projecting light objects onto a two-dimensional or three-dimensional object. Sensor means are provided for large-area optical detection of the light objects projected onto the object and are connected in a signal-conducting manner to logic means for evaluating the sensor information.

Publication US 2006/059699 A1 aims to disclose a spherically rotatable support for a light image projector that has level and/or plumb indicators for leveling or plumbing a central reference frame of its spherical rotation. A projected light image, such as a laser line segment of relatively short length is successively stepped across a long wall while maintaining its level or plumb condition. A low powered laser or other light source is used to generate the short-length, line segment in place of higher powered light source that would otherwise be needed to illuminate the full length of the wall or other such surface.

### Summary

The objectives of the present invention are achieved by the subject matter of claims 1, 7, 9, and 10.

In particular, the objectives are achieved by a rotatable projection device for providing projections onto the interior of a vehicle. The rotatable projection device comprises a projector, wherein a projection generated by the projector is movable, to allow alignment of the projection to an interior geometry of the interior of the vehicle, such as to a specific interior surface and/or to a part or parts of the interior of the vehicle.

The rotatable projection device further comprises:
a storage medium comprising data representing a three-dimensional model of the interior of the vehicle;
at least one depth detection camera; and
at least one infrared illumination source for generating an infrared illumination pattern;
wherein the rotatable projection device is configured to align the projection to the interior geometry by performing the steps:
   a) receiving a signal indicating a desired projection area within a surface of the three-dimensional model;
   b) calculating desired rotation angles from a position of a representation of the rotatable projection device within the three-dimensional model and a position of the desired projection area;
   c) rotating the projection to the desired rotation angles;
   d) illuminating the interior of the vehicle using the illumination source;
   e) capturing an illuminated image of the interior by the depth detection camera to generate a three-dimensional profile of the targeted projection;
   f) generating a three-dimensional profile of the targeted projection, based on the illuminated image and a stored position of the illumination source relative to the depth detection camera;
   g) comparing the generated three-dimensional profile with the desired target area within the three-dimensional model to calculate correction angles; and
   h) rotating the projection according to the correction angles.

Advantages of the present invention include that the number of parts of the interior onto which the projections may be projected may be increased without requiring additional projectors.

The projection mapping device (a RGB projector and a camera) may be mounted on a gimbal (the rotatable projection device) that is rotatable around a horizontal rotation axis (180°) and a vertical rotation axis (360°). Said setup allows the usable camera/projector field of view to be moved around in the interior vehicle environment. The projection may further be geometrically adapted to the positioning either by live depth scanning and surface recognition and/or by using an integrated 3D model.

In one embodiment, the rotatable projection device is adapted to be mounted in a ceiling of the vehicle.

In one embodiment, the projection is movable by the rotatable projection device, allowing the projector to have a first rotational degree of freedom, and preferably a second rotational degree of freedom, wherein the second rotational degree of freedom is in a plane parallel to the surface onto which it is mounted, such as the ceiling of the vehicle.

The rotation around a first axis and a second axis may be done by DC servo motors that allow the direction of the projector to be controlled.

In one embodiment, the projection is aligned to the interior geometry by receiving desired rotation angles indicated in a lookup table, the lookup table mapping interior geometry objects to corresponding rotation angles.

Based on a desired projected interior surface, the rotation angles for the first and second degree of freedom may be retrieved from the lookup table, the lookup table indicating the angles to said desired interior surface.

In a preferred embodiment, feedback may be provided that determines if the projected surface is aligned with the desired interior surface. By 3D scanning the surface, and using object recognition on the scanned surface, the device can calculate the object and their direction relative to the projector. Based on this, the projection may be adjusted or the projector rotated to orient itself correctly to the projected object.

The three-dimensional profile of the targeted projection (range image) may be generated from the illuminated image and pre-stored information about the camera and illumination source located relative to each other using known techniques. One such technique is structured-light 3D scanning.

Correction angles may be calculated using known techniques for calculating offset distance and direction between two models of surface shapes (the generated three-dimensional profile and the desired target area within the three-dimensional model). One such technique is least squares 3D surface matching.

Such a setup provides feedback to ensure that the desired projected surface is accurately projected.

In one embodiment, the projections are dynamic, indicating states of the vehicle, indicating objects outside the vehicle, and/or are interactive.

A passenger may use gestures captured by the three-dimensional profile to give instructions to the vehicle. Feedback may be provided on an interior surface of the vehicle. In this way, an interactive natural user interface may be provided in the vehicle.

The objectives of the present invention are further achieved by a system comprising a vehicle and the rotatable projection devices as described herein, mounted in the ceiling of the vehicle.

The objectives of the present invention are further achieved by a method for providing projections onto an interior geometry of a vehicle, by rotating the rotatable projection devices as described herein, the method comprising the steps:
a) receiving a signal indicating a desired projection area in a surface of a three-dimensional model;
b) calculating a desired rotation angles from a position of a representation of a rotatable projection device within the three-dimensional model;
c) rotating a projection of the rotatable projection device to the desired rotation angles;
d) illuminating the interior of the vehicle with an infrared illumination pattern using an illumination source;
e) capturing the illuminated interior using a depth detection camera;
f) generating a three-dimensional profile of the targeted projection based on the captured illuminated interior, and stored position of the illumination source relative to the depth detection camera;
g) comparing the generated three-dimensional profile with the desired target area within the three-dimensional model to calculate correction angles, if any; and
h) rotating the projection according to the correction angles.

In one embodiment, the method further comprises the steps:
i) illuminating the interior of the vehicle using the illumination source;
j) capturing the illuminated interior using the depth detection camera to generate a three-dimensional profile of the targeted projection;
k) comparing the generated three-dimensional profile to the desired target area within the three-dimensional model to determine if the interior geometry of the target area has changed or moved;
l) moving and/or re-aligning and/or changing the projection in response to a determination that the interior geometry of the target area has changed or moved.

Advantages of said embodiment include that the projections of the projector may follow moving objects, such as a steering wheel, gear stick, and/or a body part such as a hand of a driver and/or a passenger. The image projected can therefore follow an object also beyond the static projector field of view.

The objectives of the present invention are further achieved by a computer program comprising instructions to cause the rotatable projection devices as described herein to execute the steps of the methods as described herein.

The objectives of the present invention are further achieved by a computer-readable medium having stored thereon the computer programs as described herein.

### Detailed description of the figures

In the following, embodiments of the invention are described with respect to the figures, wherein:
Fig. 1 schematically depicts a rotatable projection device for providing projections onto an interior surface of a vehicle.
Fig. 2 schematically depicts a rotatable projection device with depth detection camera and infrared illumination source.
Fig. 3 shows a projection onto an interior surface of a vehicle.
Fig. 4 shows a projection onto a surface of another part of the interior of a vehicle.

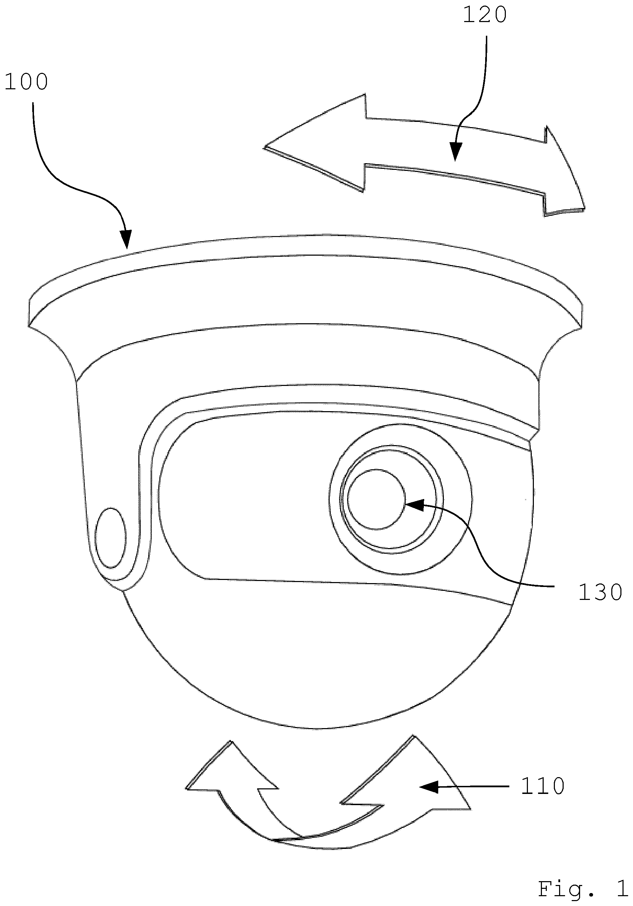

Fig. 1 shows a rotatable projection device 100 comprising a projector 130. A projection onto the interior of a vehicle, as generated by the projector, may be moved by directing the projection in different directions by moving the projector in a rotational first degree of freedom 110, and in a second rotational degree of freedom 120.

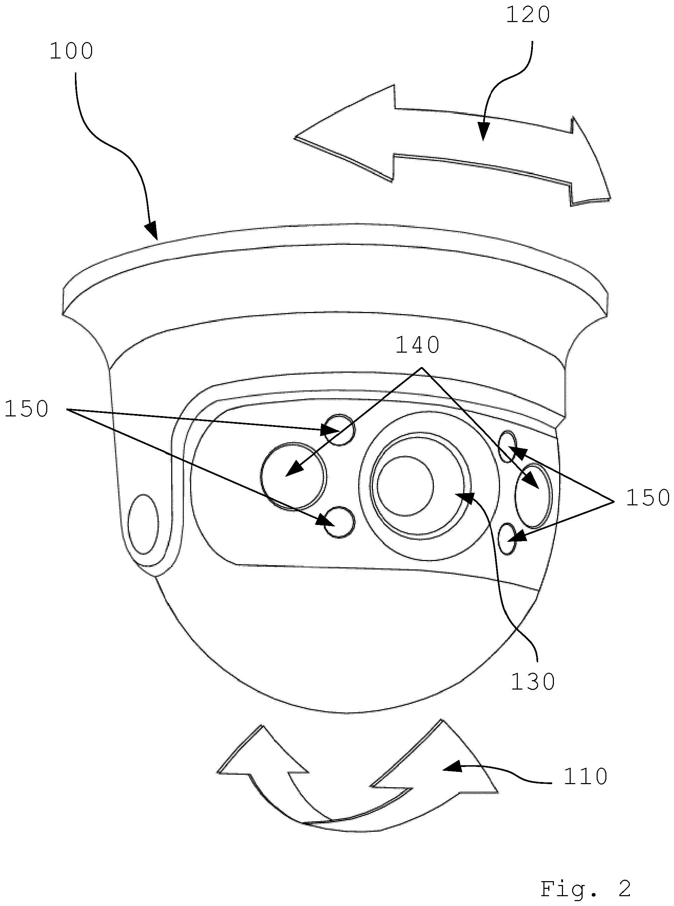

Fig. 2 shows a rotatable projection device 100 further comprising at least one depth detection camera 140, and at least one infrared illumination source 150 for generating an infrared illumination pattern onto an interior surface of the vehicle.
The depth detection camera 140 and the infrared illumination source 150 may be used to generate a three-dimensional real-time profile of the vehicle interior.

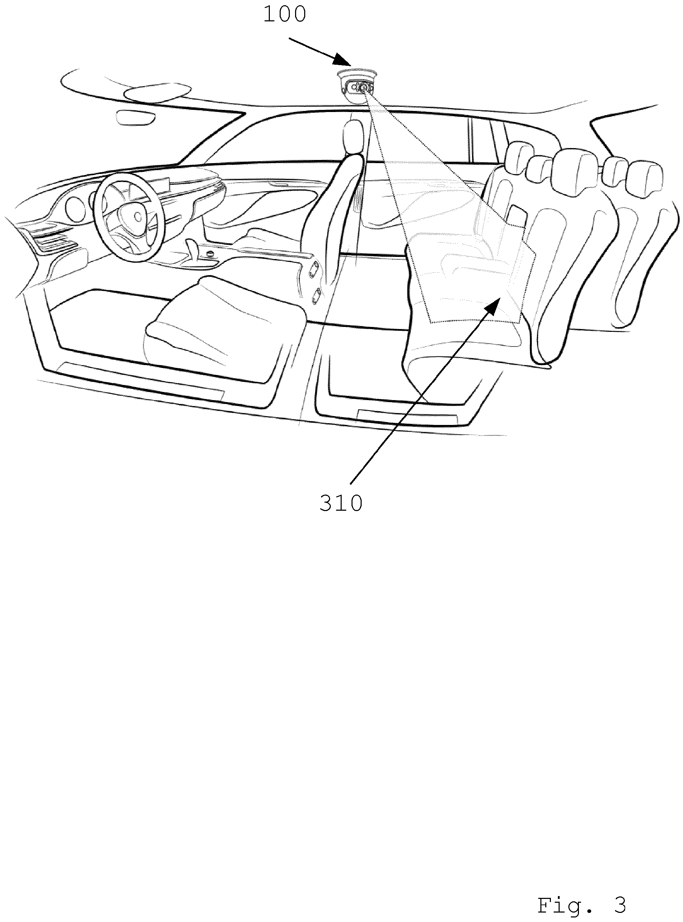

Fig. 3 shows a projection onto an interior geometry 310 of an interior surface of the vehicle, in this example, the backseat. In one example the projections may show instructions, such as how to secure the safety belt, or how to fold the back of the backseat.

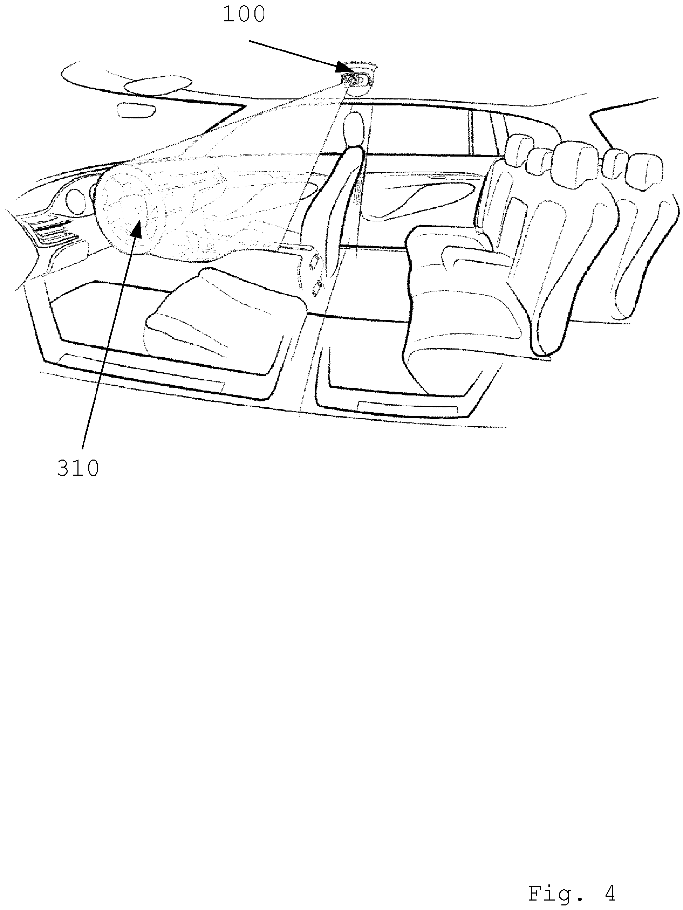

Fig. 4 shows a projection onto an interior geometry 310 of an interior surface of the vehicle. In this example, the projection happens onto the central instruments and the steering wheel.

### Reference numerals:

- 100: Rotatable projection device
- 110: First rotational degree of freedom
- 120: Second rotational degree of freedom
- 130: Projector
- 140: Depth detection camera
- 150: Infrared illumination source
- 310: Projection onto an interior geometry

## Claims

1. A rotatable projection device (100) for providing projections onto an interior of a vehicle, the rotatable projection device (100) comprising:
a projector (130);
a storage medium comprising data representing a three-dimensional model of the interior of the vehicle;
at least one depth detection camera (140); and
at least one infrared illumination source (150) for generating an infrared illumination pattern;
wherein a projection generated by the projector is movable to align the projection with an interior geometry (310) of the interior of the vehicle, such as to a specific interior surface and/or to a part or parts of the interior of the vehicle; and
wherein the rotatable projection device (100) is configured to align the projection to the interior geometry by performing the steps:
a) receiving a signal indicating a desired projection area within a surface of the three-dimensional model;
b) calculating desired rotation angles from a position of a representation of the rotatable projection device (100) within the three-dimensional model and a position of the desired projection area;
c) rotating the projection to the desired rotation angles;
d) illuminating the interior of the vehicle using the illumination source (150);
e) capturing an illuminated image of the interior by the depth detection camera (140) to generate a three-dimensional profile of the targeted projection;
f) generating a three-dimensional profile of the targeted projection based on the illuminated image, and a stored position of the illumination source (150) relative to the depth detection camera (140);
g) comparing the generated three-dimensional profile with the desired target area within the three-dimensional model to calculate correction angles; and
h) rotating the projection according to the correction angles.

2. The rotatable projection device (100) of claim 1,
wherein the rotatable projection device (100) is adapted to be mounted in a ceiling of the vehicle.

3. The rotatable projection device (100) of claim 1 or claim 2,
wherein the projection is movable by the rotatable projection device (100) allowing the projector to have a first rotational degree of freedom (110), and preferably a second rotational degree of freedom (120), wherein the second rotational degree of freedom (120) is in a plane parallel to a ceiling of the vehicle.

4. The rotatable projection device (100) of any of the previous claims, wherein the projection is aligned to the interior geometry by receiving desired rotation angles indicated in a lookup table, the lookup table mapping interior geometry objects to corresponding rotation angles.

5. The rotatable projection device (100) of any of the previous claims, wherein the projections are dynamic, indicating states of the vehicle, indicating objects outside the vehicle, and/or are interactive.

6. A system comprising a vehicle and the rotatable projection device (100) of any of the previous claims, mounted in a ceiling of the vehicle.

7. A method for providing projections onto an interior geometry of a vehicle, by rotating the rotatable projection device (100) of any of the previous claims, the method comprising the steps:
a) receiving a signal indicating a desired projection area in a surface of a three-dimensional model;
b) calculating a desired rotation angles from a position of a representation of a rotatable projection device (100) within the three-dimensional model;
c) rotating a projection of the rotatable projection device (100) to the desired rotation angles;
d) illuminating the interior of the vehicle with an infrared illumination pattern using an illumination source (150);
e) capturing the illuminated interior using a depth detection camera (140);
f) generating a three-dimensional profile of the targeted projection based on the captured illuminated interior, and stored position of the illumination source (150) relative to the depth detection camera (140);
g) compare the generated three-dimensional profile with the desired target area within the three-dimensional model to calculate correction angles, if any; and
h) rotating the projection according to the correction angles.

8. The method of claim 7, further comprising the steps:
i) illuminating the interior of the vehicle using the illumination source (150);
j) capturing the illuminated interior using the depth detection camera (140) to generate a three-dimensional profile of the targeted projection;
k) comparing the generated three-dimensional profile to the desired target area within the three-dimensional model to determine if the interior geometry of the target area has changed or moved;
l) moving and/or re-aligning and/or changing the projection in response to a determination that the interior geometry of the target area has changed or moved.

9. A computer program comprising instructions to cause the rotatable projection device (100) of any one of the claims 1 to 5, to execute the steps of the method of claim 7 or claim 8.

10. A computer-readable medium having stored thereon the computer program of claim 9.

## Patentansprüche

1. Drehbare Projektionsvorrichtung (100) zum Bereitstellen von Projektionen auf einen Innenraum eines Fahrzeugs, wobei die drehbare Projektionsvorrichtung (100) Folgendes umfasst:
einen Projektor (130);
ein Speichermedium, das Daten enthält, die ein dreidimensionales Modell des Innenraums des Fahrzeugs darstellen;
wenigstens eine Tiefendetektionskamera (140); und
wenigstens eine Infrarotbeleuchtungsquelle (150) zum Erzeugen eines Infrarotbeleuchtungsmusters;
wobei eine durch den Projektor erzeugte Projektion beweglich ist, um die Projektion auf eine Innenraumgeometrie (310) des Innenraums des Fahrzeugs auszurichten, etwa auf eine bestimmte Innenraumoberfläche und/oder auf einen oder mehrere Teile des Innenraums des Fahrzeugs; und
wobei die drehbare Projektionsvorrichtung (100) konfiguriert ist, die Projektion durch Ausführen der folgenden Schritte auf die Innenraumgeometrie auszurichten:
a) Empfangen eines Signals, das einen gewünschten Projektionsbereich innerhalb einer Oberfläche des dreidimensionalen Modells angibt;
b) Berechnen gewünschter Drehwinkel anhand einer Position einer Darstellung der drehbaren Projektionsvorrichtung (100) innerhalb des dreidimensionalen Modells und anhand einer Position des gewünschten Projektionsbereichs;
c) Drehen der Projektion zu den gewünschten Drehwinkeln;
d) Beleuchten des Innenraums des Fahrzeugs unter Verwendung der Beleuchtungsquelle (150);
e) Aufnehmen eines beleuchteten Bildes des Innenraums durch die Tiefendetektionskamera (140), um ein dreidimensionales Profil der angestrebten Projektion zu erzeugen;
f) Erzeugen eines dreidimensionalen Profils der angestrebten Projektion basierend auf dem beleuchteten Bild und einer gespeicherten Position der Beleuchtungsquelle (150) relativ zu der Tiefendetektionskamera (140);
g) Vergleichen des erzeugten dreidimensionalen Profils mit dem gewünschten Zielbereich innerhalb des dreidimensionalen Modells, um Korrekturwinkel zu berechnen; und
h) Drehen der Projektion entsprechend den Korrekturwinkeln.

2. Drehbare Projektionsvorrichtung (100) nach Anspruch 1,
wobei die drehbare Projektionsvorrichtung (100) dafür ausgelegt ist, an einem Dachhimmel des Fahrzeugs montiert zu werden.

3. Drehbare Projektionsvorrichtung (100) nach Anspruch 1 oder 2,
wobei die Projektion durch die drehbare Projektionsvorrichtung (100) beweglich ist, was zulässt, dass der Projektor einen ersten Drehfreiheitsgrad (110) besitzt und vorzugsweise einen zweiten Drehfreiheitsgrad (120) besitzt, wobei der zweite Drehfreiheitsgrad (120) in einer Ebene parallel zu einem Dachhimmel des Fahrzeugs liegt.

4. Drehbare Projektionsvorrichtung (100) nach einem der vorhergehenden Ansprüche,
wobei die Projektion durch Empfangen gewünschter Drehwinkel, die in einer Nachschlagtabelle angegeben sind, die Objekte der Innenraumgeometrie auf entsprechende Drehwinkel abbildet, auf die Innenraumgeometrie ausgerichtet wird.

5. Drehbare Projektionsvorrichtung 100) nach einem der vorhergehenden Ansprüche,
wobei die Projektionen dynamisch sind und Zustände des Fahrzeugs und Objekte außerhalb des Fahrzeugs angeben und/oder interaktiv sind.

6. System, das ein Fahrzeug und eine drehbare Projektionsvorrichtung (100) nach einem der vorhergehenden Ansprüche, die an einem Dachhimmel des Fahrzeugs montiert ist, umfasst.

7. Verfahren zum Bereitstellen von Projektionen auf eine Innenraumgeometrie eines Fahrzeugs durch Drehen der drehbaren Projektionsvorrichtung (100) nach einem der vorhergehenden Ansprüche, wobei das Verfahren die folgenden Schritte umfasst:
a) Empfangen eines Signals, das einen gewünschten Projektionsbereich innerhalb einer Oberfläche eines dreidimensionalen Modells angibt;
b) Berechnen gewünschter Drehwinkel anhand einer Position einer Darstellung einer drehbaren Projektionsvorrichtung (100) innerhalb des dreidimensionalen Modells;
c) Drehen einer Projektion der drehbaren Projektionsvorrichtung (100) zu den gewünschten Drehwinkeln;
d) Beleuchten des Innenraums des Fahrzeugs mit einem Infrarotbeleuchtungsmuster unter Verwendung einer Beleuchtungsquelle (150);
e) Aufnehmen des beleuchteten Innenraums unter Verwendung einer Tiefendetektionskamera (140);
f) Erzeugen eines dreidimensionalen Profils der angestrebten Projektion basierend auf dem aufgenommen beleuchteten Innenraum und anhand einer gespeicherten Position der Beleuchtungsquelle (150) relativ zu der Tiefendetektionskamera (140);
g) Vergleichen des erzeugten dreidimensionalen Profils mit dem gewünschten Zielbereich innerhalb des dreidimensionalen Modells, um Korrekturwinkel zu berechnen, falls solche vorhanden sind; und
h) Drehen der Projektion entsprechend den Korrekturwinkeln.

8. Verfahren nach Anspruch 7, das ferner die folgenden Schritte umfasst:
i) Beleuchten des Innenraums des Fahrzeugs unter Verwendung der Beleuchtungsquelle (150);
j) Aufnehmen des beleuchteten Innenraums unter Verwendung der Tiefendetektionskamera (140), um ein dreidimensionales Profil der angestrebten Projektion zu erzeugen;
k) Vergleichen des erzeugten dreidimensionalen Profils mit dem gewünschten Zielbereich innerhalb des dreidimensionalen Modells, um zu bestimmen, ob sich die Innenraumgeometrie des Zielbereichs geändert oder bewegt hat;
l) Bewegen und/oder erneutes Ausrichten und/oder Ändern der Projektion in Reaktion auf eine Bestimmung, dass sich die Innenraumgeometrie des Zielbereichs geändert oder bewegt hat.

9. Computerprogramm, das Anweisungen enthält, um die drehbare Projektionsvorrichtung (100) nach einem der Ansprüche 1 bis 5 zu veranlassen, die Schritte des Verfahrens nach Anspruch 7 oder Anspruch 8 auszuführen.

10. Computerlesbares Medium, in dem das Computerprogramm nach Anspruch 9 gespeichert ist.

## Revendications

1. Dispositif de projection rotatif (100) pour produire des projections sur un intérieur d'un véhicule, le dispositif de projection rotatif (100) comprenant :
un projecteur (130) ;
un support de stockage comprenant des données représentant un modèle tridimensionnel de l'intérieur du véhicule ;
au moins une caméra de détection de profondeur (140) ; et
au moins une source d'éclairage infrarouge (150) destinée à générer un schéma d'éclairage infrarouge ;
dans lequel une projection générée par le projecteur peut se déplacer pour aligner la projection avec une géométrie d'intérieur (310) de l'intérieur du véhicule, telle qu'une surface intérieure spécifique et/ou une partie ou des parties de l'intérieur du véhicule ; et
dans lequel le dispositif de projection rotatif (100) est configuré pour aligner la projection avec la géométrie d'intérieur au moyen de l'exécution des étapes suivantes :
a) la réception d'un signal indiquant une zone de projection souhaitée à l'intérieur d'une surface du modèle tridimensionnel ;
b) le calcul d'angles de rotation souhaités entre une position d'une représentation du dispositif de projection rotatif (100) à l'intérieur du modèle tridimensionnel et une position de la zone de projection souhaitée ;
c) la rotation de la projection aux angles de rotation souhaités ;
d) l'éclairage de l'intérieur du véhicule à l'aide de la source d'éclairage (150) ;
e) la capture d'une image éclairée de l'intérieur par la caméra de détection de profondeur (140) pour générer un profil tridimensionnel de la projection ciblée ;
f) la génération d'un profil tridimensionnel de la projection ciblée sur la base de l'image éclairée, et d'une position stockée de la source d'éclairage (150) par rapport à la caméra de détection de profondeur (140) ;
g) la comparaison du profil tridimensionnel généré avec la zone cible souhaitée à l'intérieur du modèle tridimensionnel pour calculer des angles de correction ; et
h) la rotation de la projection en fonction des angles de projection.

2. Dispositif de projection rotatif (100) selon la revendication 1,
dans lequel le dispositif de projection rotatif (100) est conçu pour être monté dans un plafond du véhicule.

3. Dispositif de projection rotatif (100) selon la revendication 1 ou la revendication 2,
dans lequel la projection peut être déplacée par le dispositif de projection rotatif (100), permettant au projecteur de disposer d'un premier degré de liberté de rotation (110), et de préférence d'un second degré de liberté de rotation (120), dans lequel le second degré de liberté de rotation (120) est dans un plan parallèle à un plafond du véhicule.

4. Dispositif de projection rotatif (100) selon l'une quelconque des revendications précédentes,
dans lequel la projection est alignée sur la géométrie d'intérieur au moyen de la réception d'angles de rotation souhaités indiqués dans une table de consultation, la table de consultation mappant des objets de géométrie d'intérieur avec des angles de rotation correspondants.

5. Dispositif de projection rotatif (100) selon l'une quelconque des revendications précédentes,
dans lequel les projections sont dynamiques, indiquant des états du véhicule, indiquant des objets à l'extérieur du véhicule, et/ou sont interactives.

6. Système comprenant un véhicule et le dispositif de projection rotatif (10) selon l'une quelconque des revendications précédentes, monté dans un plafond du véhicule.

7. Procédé de production de projections sur une géométrie d'intérieur d'un véhicule, au moyen de la rotation du dispositif de projection rotatif (100) selon l'une quelconque des revendications précédentes, le procédé comprenant les étapes suivantes :
a) la réception d'un signal indiquant une zone de projection souhaitée à l'intérieur d'une surface d'un modèle tridimensionnel ;
b) le calcul d'angles de rotation souhaités depuis une position d'une représentation du dispositif de projection rotatif (100) à l'intérieur du modèle tridimensionnel ;
c) la rotation d'une projection du dispositif de projection rotatif (100) aux angles de rotation souhaités ;
d) l'éclairage de l'intérieur du véhicule à l'aide d'un schéma d'éclairage infrarouge au moyen d'une source d'éclairage (150) ;
e) la capture de l'intérieur éclairé au moyen d'une caméra de détection de profondeur (140) ;
f) la génération d'un profil tridimensionnel de la projection ciblée sur la base de l'intérieur éclairé capturé, et d'une position stockée de la source d'éclairage (150) par rapport à la caméra de détection de profondeur (140) ;
g) la comparaison du profil tridimensionnel généré avec la zone cible souhaitée à l'intérieur du modèle tridimensionnel pour calculer des angles de correction, le cas échéant ; et
h) la rotation de la projection en fonction des angles de projection.

8. Procédé selon la revendication 7, comprenant en outre les étapes suivantes :
i) l'éclairage de l'intérieur du véhicule au moyen de la source d'éclairage (150) ;
j) la capture de l'intérieur éclairé au moyen de la caméra de détection de profondeur (140) pour générer un profil tridimensionnel de la projection souhaitée ;
k) la comparaison du profil tridimensionnel généré avec la zone cible souhaitée à l'intérieur du modèle tridimensionnel pour déterminer si la géométrie d'intérieur de la zone cible a changé ou s'est déplacée ;
l) le déplacement et/ou le réalignement et/ou la modification de la projection en réponse à une détermination que la géométrie d'intérieur de la zone cible a changé ou s'est déplacée.

9. Programme informatique comprenant des instructions destinées à amener le dispositif de projection rotatif (100) selon l'une quelconque des revendications 1 à 5 à exécuter les étapes du procédé selon la revendication 7 ou la revendication 8.

10. Support lisible par ordinateur ayant stocké en son sein le programme informatique selon la revendication 9.
